# EUROPÄISCHE PATENTSCHRIFT

(11) **EP 1 531 714 B1**
(45) Veröffentlichungstag und Bekanntmachung des Hinweises auf die Patenterteilung: **07.09.2016**
(21) Anmeldenummer: 03793626.7
(22) Anmeldetag: 22.07.2003
(51) Int. Cl.: A47L 15/42, D06F 39/00, G01N 33/18

(54) **VERFAHREN ZUM BETREIBEN EINES WASSERFÜHRENDEN GERÄTS UND WASSERFÜHRENDES GERÄT**
METHOD FOR OPERATING A WATER-GUIDING DEVICE AND WATER-GUIDING DEVICE
PROCEDE POUR FAIRE FONCTIONNER UN APPAREIL AQUIFERE ET APPAREIL AQUIFERE

(30) Priorität: 19.08.2002 DE 10237854
(43) Veröffentlichungstag der Anmeldung: 25.05.2005
(73) Patentinhaber: BSH Hausgeräte GmbH, 81739 München (DE)
(72) Erfinder: EIERMANN, Rüdiger, 89428 Sygenstein (DE); JERG, Helmut, 89537 Giengen (DE); KIMMICH, Reinhard, 78476 Allensbach (DE)
(86) Internationale Anmeldenummer: PCT/EP2003/008007
(87) Internationale Veröffentlichungsnummer: WO 2004/021853

(56) Entgegenhaltungen:
- EP-A- 0 526 860
- EP-A- 0 852 929
- DE-A- 2 949 254
- DE-A- 3 000 826
- DE-A- 4 311 064
- DE-A- 19 959 310
- FR-A- 2 485 576
- US-A- 5 172 572

## Beschreibung

Die Erfindung betrifft ein Verfahren zum Betreiben eines wasserführenden Geräts und ein wasserführendes Gerät zum Betreiben dieses Verfahrens.

Derzeit am Markt befindliche wasserführende Geräte, z.B. Geschirrspülmaschinen, insbesondere Haushalt-Geschirrspülmaschinen, oder Waschmaschinen, insbesondere Haushalt-Waschmaschinen, weisen üblicherweise eine Steuereinrichtung - ein Programmsteuergerät - auf, mit der ein aus Teilprogrammschritten zusammensetzbares Reinigungsprogramm betrieben wird und an dem ein vom Benutzer ausgewähltes Reinigungsprogramm mit voreingestellten und/oder auswählbaren Parametern eingestellt werden kann.

Aus der DE 1 96 51 344 A1 ist aber demgegenüber ein Verfahren zum Betreiben einer Geschirrspülmaschine - eines wasserführenden Geräts - bekannt geworden, bei dem am Programmbeginn die Geschirrspülmaschine lediglich in Gang gesetzt wird und die für den Fortgang des Reinigungsvorganges einzustellende Parameter abhängig von wenigstens einem für den Fortgang des Reinigungsvorganges notwendigen und durch ihn beeinflussten, erfassten Parameter eingestellt werden, wobei wenigstens ein Parameter mittels eines Trübungssensors aus der Trübung der Reinigungsflüssigkeit ermittelt wird und wodurch ein vollständig selbsttätig gesteuertes Verfahren zum Betreiben einer Geschirrspülmaschine - eines wasserführenden Geräts - geschaffen ist, bei dem eine Fehlbedienung durch den Benutzer vollständig ausgeschlossen ist und wodurch der Energie- und Wasserverbrauch der ein im G runde automatischen Geschirrspülmaschine auf das g e-ringstmögliche Maß beschränkt wird.

Nachteilig bei dem Einsatz eines Trübungssensors nach dem vorbeschriebenen Verfahren ist allerdings, dass Verschmutzungen der Reinigungsflüssigkeit, die sich in der Reinigungsflüssigkeit vollständig auflösen und dabei keine Trübung der Reinigungsflüssigkeit erzeugen, natürlich nicht erkannt werden können. Daher ist also in einem solchen Fall ein Rückschluss auf den Reinigungszustand des zu reinigenden Gutes mit Trübungssensoren nicht möglich.

In der Praxis hat sich gezeigt, dass insbesondere organische Stoffe derartige Eigenschaften haben. Da das in wasserführenden Geräten, z.B. Geschirrspülmaschinen oder Waschmaschinen zu reinigende Gut hauptsächlich mit organischen Rückständen - Speisereste, Schweiß, Hautpartikel etc. - verschmutzt ist, ist die Erfassung mittels eines Trübungssensors in der Aussage über den Reinigungsgrad des zu reinigenden Gutes in Bezug auf die Reinigung von lösbaren organischen Verschmutzungen nicht geeignet.

Der Erfindung liegt daher die Aufgabe zugrunde ein Verfahren und ein Gerät zum Betreiben dieses Verfahrens zu schaffen, mit dem Verschmutzungen der Reinigungsflüssigkeit, die sich in der Reinigungsflüssigkeit vollständig auflösen und dabei keine Trübung der Reinigungsflüssigkeit erzeugen, erkannt werden können.

Diese Aufgabe wird durch das erfindungsgemäße Verfahren mit den Merkmalen gemäß Anspruch 1 und dem wasserführenden Gerät mit den Merkmalen gemäß dem weiteren unabhängigen Anspruch gelöst. Vorteilhafte Weiterbildungen der Erfindungen sind in den Unteransprüchen gekennzeichnet.

Nach dem erfindungsgemäßen Verfahren zum Betreiben eines wasserführenden Geräts, wird in wenigstens einem Teilprogrammschritt der Verschmutzungsgrad der Reinigungsflüssigkeit mittels einer Nassverbrennung und Feststellung der Verbrennungsmenge ermittelt.

Bei einer sogenannten Nassverbrennung werden in Flüssigkeiten enthaltene organische Bestandteile ("verbrannt") oxidiert. Aus der Verbrennungsmenge kann z.B. bei einer Reinigungsflüssigkeit in einer Geschirrspülmaschine oder Waschmaschine festgestellt werden, wie viel unsichtbare, gelöste organische Rückstände in der Flüssigkeit enthalten sind und damit auch auf den Reinigungsgrad des zu reinigenden Gutes rückgeschlossen werden. Mit der Erfindung ist es gelungen ein Verfahren zu schaffen, mit dem Verschmutzungen der Reinigungsflüssigkeit, die sich in der Reinigungsflüssigkeit vollständig auflösen und dabei keine Trübung der Reinigungsflüssigkeit erzeugen, erkannt werden können.

Ein Verfahren gemäß dem Oberbegriff des Anspruchs 1 ist aus DE 30 00 826 A1 bekannt. Nach dem erfindungsgemäßen Verfahren wird eine vorbestimmte Menge Ozon in eine Teilmenge der Reinigungsflüssigkeit ein-, durch- und ausgeleitet und mittels mindestens eines angeordneten Sensors die Menge des ausgeleiteten Ozons gemessen und mit der Menge des eingeleiteten Ozons verglichen. Es ist bekannt, dass Ozon (O₃) vollständig aus Sauerstoffatomen aufgebaut und eine hochenergetische Form von Sauerstoff ist, und dass Ozon insbesondere mit Kohlenwasserstoffen schnell reagiert, wobei die Kohlenwasserstoffe in CO₂ umgewandelt und ausgeschieden werden. Hieraus erklärt sich auch die Verwendung von Ozon in Sterilisier-, Desinfektions- und Reinigungsmitteln (siehe z.B. EP 0 716 686 B1). Ozon ist in Wasser schwerlöslich, weshalb eine Verfälschung des Messergebnisses durch Lösung des Ozons in der zu messenden Flüssigkeit nicht zu erwarten ist.

Bekannt ist ferner das Desinfizieren und Desodorieren eines Innenraum eines Mikrowellenherds (siehe DE-OS 3 9 04 418) und das Desodorieren einer G eschirrspülmaschine mittels Ozon (siehe DE-OS 39 21 177). Weiterhin ist das Behandeln bevorrateter Waschflüssigkeit durch Ozon zur Desinfizierung und Desodorierung (siehe DE-OS 35 40 335) bekannt.

Mit dem erfindungsgemäßen wasserführenden Gerät wird das erfindungsgemäße Verfahren mit den genannten Vorteilen durchgeführt.

Bevorzugt wird die Menge des ausgeleiteten Ozons mittels mindestens eines angeordneten Sensors gemessen und in einer Steuereinrichtung mit der Menge des eingeleiteten Ozons verglichen.

In besonders vorteilhafter Weise kann aufgrund des Vergleichsergebnis der Programmablauf des wasserführenden Gerätes geändert werden. Sollte sich nun herausstellen, dass die Mengen etwa gleich groß sind, ist das zu reinigende Gut von organischen Stoffen vollständig befreit und die Beendigung des Reinigungsvorgangs kann eingeleitet werden. Sollte sich aber herausstellen, dass die Mengen unterschiedlich sind, so wird jedenfalls der Reinigungsvorgang fortgesetzt.

Vorteilhafterweise können aufgrund des Vergleichsergebnis entsprechend des festgestellten Unterschiedes der Mengen entsprechende Parameter des Programmablaufes des wasserführenden Gerätes geändert werden. Über die Steuereinrichtung des wasserführenden Gerätes können also entsprechend des festgestellten Unterschiedes der Mengen, d.h. entsprechend des schon erzielten Reinigungsgrades des zu reinigenden Gutes, Maßnahmen eingeleitet werden, die z.B. eine intensivere Reinigung bewirken, z.B. höhere Temperatur oder längere Laufdauer usw..

Weiterhin ist es bei dem erfindungsgemäßen wasserführenden Gerät vorteilhaft, dass die wieder ausgeleitete Restmenge an Ozons zur direkten Einwirkung auf das zu reinigende Gut kommt und dort die Reinigungswirkung des verwendeten Reinigungsmittels unterstützen und/oder zur Desodorierung betragen kann. Durch Einwirkung des Ozons wird die Reinigungswirkung des Reinigers besser aktiviert, wodurch der Einsatz an üblicherweise in derartigen Reinigungsmitteln enthaltenen Tensiden verringert werden kann. Ozon hat auch eine Bleichwirkung insbesondere auf die an dem zu reinigenden Gut anhaftenden Verschmutzungen, die durch das Einwirken auf das zu reinigende Gut ausgenutzt werden kann. Die Bleichwirkung auf die Verschmutzungen verringert die Haftung der Verschmutzungen auf dem zu reinigenden Gut und bewirkt also eine schnellere und bessere Reinigung. Das Ozon wirkt natürlich auch durch die Nassverbrennung bei der Säuberung der übrigen Reinigungsflüssigkeit vorteilhaft mit.

Nach einer vorteilhaften Ausführungsform des erfindungsgemäßen wasserführenden Gerätes wird nach Abschluss des Reinigungsvorgangs Ozon in das Innere des Gerätes eingeleitet, womit eine Desinfizierung des Geräteinneren und wenn gewünscht und noch vorhanden auch des zu reinigenden Guts erreicht wird.

## Patentansprüche

1. Verfahren zum Betreiben eines wasserführenden Geräts, bei dem in wenigstens einem Teilprogrammschritt der Verschmutzungsgrad der Reinigungsflüssigkeit mittels einer Nassverbrennung und Feststellung des Verbrennungsgrades ermittelt wird, **dadurch gekennzeichnet, dass** eine vorbestimmte Menge Ozon in eine Teilmenge der Reinigungsflüssigkeit ein-, durch- und ausgeleitet wird und die Menge des ausgeleiteten Ozons gemessen und mit der Menge des eingeleiteten Ozons verglichen wird.

2. Wasserführendes Gerät **dadurch gekennzeichnet, dass** ein Verfahren nach Anspruch 1 durchgeführt wird.

3. Wasserführendes Gerät nach Anspruch 2, **dadurch gekennzeichnet, dass** die Menge des ausgeleiteten Ozons mittels mindestens eines angeordneten Sensors gemessen und in einer Steuereinrichtung mit der Menge des eingeleiteten Ozons verglichen wird.

4. Wasserführendes Gerät nach Anspruch 2 oder 3, **dadurch gekennzeichnet, dass** aufgrund des Vergleichsergebnis der Programmablauf des wasserführenden Gerätes geändert werden kann.

5. Wasserführendes Gerät nach einem der Ansprüche 2 bis 4, **dadurch gekennzeichnet, dass** aufgrund des Vergleichsergebnis entsprechend des festgestellten Unterschiedes der Mengen entsprechende Parameter des Programmablaufes des wasserführenden Gerätes geändert werden können.

6. Wasserführendes Gerät nach einem der Ansprüche 2 bis 5, **dadurch gekennzeichnet, dass** das ausgeleitete Ozon auf das zu reinigende Gut geleitet wird.

7. Wasserführendes Gerät nach einem der Ansprüche 2 bis 5, **dadurch gekennzeichnet, dass** nach Abschluss des Reinigungsvorgangs Ozon in das Innere des Gerätes eingeleitet wird.

## Claims

1. Method for operating a water-guiding device, in which in at least one partial program step the degree of contamination of the cleaning liquid is determined by means of a wet combustion and ascertaining of the degree of combustion, **characterised in that** a predetermined quantity of ozone is introduced into, passed through and extracted from a partial quantity of the cleaning liquid and the quantity of ozone extracted and the quantity of ozone introduced are compared.

2. Water-guiding device, **characterised in that** a method according to claim 1 is performed.

3. Water-guiding device according to claim 2, **characterised in that** the quantity of ozone extracted is measured by means of at least one disposed sensor and is compared in a control device with the quantity of ozone introduced.

4. Water-guiding device according to claim 2 or 3, **characterised in that** the program sequence of the water-guiding device can be changed on the basis of the result of the comparison.

5. Water-guiding device according to one of claims 2 to 4, **characterised in that**, according to the determined difference in quantities, corresponding parameters of the program sequence of the water-guiding device can be changed on the basis of the result of the comparison.

6. Water-guiding device according to one of claims 2 to 5, **characterised in that** the extracted ozone is conducted to the goods to be cleaned.

7. Water-guiding device according to one of claims 2 to 5, **characterised in that** ozone is introduced into the interior of the device once the cleaning process has concluded.

## Revendications

1. Procédé pour faire fonctionner un appareil à circulation d'eau, dans lequel, dans au moins une étape de programme partielle, le degré de salissure du liquide de nettoyage est déterminé au moyen d'une combustion humide et de la détermination du degré de combustion, **caractérisé en ce qu'**une quantité prédéterminée d'ozone est introduite, mise en circulation et extraite d'une quantité partielle du liquide de nettoyage et la quantité d'ozone extraite est mesurée et comparée à la quantité d'ozone introduite.

2. Appareil à circulation d'eau, **caractérisé en ce qu'**un procédé selon la revendication 1 est exécuté.

3. Appareil à circulation d'eau selon la revendication 2, **caractérisé en ce que** la quantité d'ozone extraite est mesurée à l'aide d'au moins un capteur installé et est comparée, dans un dispositif de commande, à la quantité d'ozone introduite.

4. Appareil à circulation d'eau selon la revendication 2 ou 3, **caractérisé en ce que** le déroulement du programme de l'appareil à circulation d'eau peut être modifié sur la base du résultat de la comparaison.

5. Appareil à circulation d'eau selon l'une des revendications 2 à 4, **caractérisé en ce que**, en se basant sur le résultat de la comparaison, et en fonction de la différence constatée entre les quantités, des paramètres correspondants du déroulement du programme de l'appareil à circulation d'eau peuvent être modifiés.

6. Appareil à circulation d'eau selon l'une des revendications 2 à 5, **caractérisé en ce que** l'ozone extrait est dirigé sur les articles à nettoyer.

7. Appareil à circulation d'eau selon l'une des revendications 2 à 5, **caractérisé en ce que** l'ozone est envoyé à l'intérieur de l'appareil une fois le processus de nettoyage terminé.
